Europäisches Patentamt

European Patent Office

Office européen des brevets

(11) Publication number: **0 151 227**
**B1**

# EUROPEAN PATENT SPECIFICATION

(45) Date of publication of patent specification: **02.03.88**

(51) Int. Cl.⁴: **B 65 G 21/20, B 65 G 47/18**

(21) Application number: **84112532.1**

(22) Date of filing: **17.10.84**

(54) Use of a composite material for a supporting element for a conveyor belt.

(30) Priority: **11.11.83 SE 8306205**

(43) Date of publication of application:
**14.08.85 Bulletin 85/33**

(45) Publication of the grant of the patent:
**02.03.88 Bulletin 88/09**

(84) Designated Contracting States:
**AT BE CH DE FR GB IT LI LU NL SE**

(56) References cited:
**DE-A-2 510 407**
**DE-A-3 140 242**
**US-A-3 590 980**

(73) Proprietor: **Brunius, H Ove T**
**Torsgatan 56**
**S-113 37 Stockholm (SE)**

(72) Inventor: **Brunius, H Ove T**
**Torsgatan 56**
**S-113 37 Stockholm (SE)**

(74) Representative: **Hynell, Magnus**
**Hynell Patenttjänst AB Box 236**
**S-683 02 Hagfors (SE)**

Courier Press, Leamington Spa, England.

## Description

Technical Field

This invention relates to the use of a composite material attached to a carrier for to supporting elements for a conveyor belt with sealing skirts arranged above the moving belt.

Background Art

Supporting elements of the above type are known e.g. from US—A—2 681 134, US—A—2 685 958, and DE—A1—25 10 407. These known devices may work to satisfaction when the skirting is so flexible that it may be turned inwards without the use of extensive force, causing the turned-in part to bear resiliently against the top side of the conveyor belt. If, on the other hand, the skirting is made of a sturdier and/or stiffer material, which may often be required in connection with some materials to be conveyed, it has not been possible to accomplish efficient sealing between the belt and the skirting according to prior art. Examples of this type of sealing devices are described e.g. in DE—A1—24 16 963, US—A—3 499 523, US—A—4 204 595, US—A—4 231 471, and US—A—4 236 628. The reason for leakage is the fact that the conveyor belt sags between the rollers. To stop leakage caused by sagging the sealing devices have in some cases been designed to follow the profile of the belt as it sags, or the conveyor been provided with more closely spaced rollers. The latter solution is expensive, however, and even if the rollers are very closely spaced, sagging cannot be avoided completely. In addition wear is concentrated on the skirting in the regions of the supporting rollers, perhaps making necessary the replacement of the skirting already after a short time of use, although only a minor part of it has been severely abraded.

Reference is also made to US—A—3 590 980 relating to a conveyor belt support in the form of a heavy mat which serves to support the belt.

The mat is secured to a pair of longitudinal beams in the conveyor frame outside the lateral edges of the belt, and the mat rests upon a pair of rounded support rails on the beams. The mat is made of rubber and may be reinforced with inserts of e.g. textile material which is so designed that the mat will retain some of its elasticity and thus can yield to a suitable degree when the conveyor belt is pushed down towards the mat by the material dropping onto the belt. It is believed that this conveyor belt support has some significant drawbacks. For the first the elasticity of a reinforced rubber mat must be fairly poor. Consequently, the wall of the feedbox cannot be pressed against the conveyor belt and therefore there is no sealing action between the feedbox and the belt. Secondly the mat as well as the conveyor belt are made of rubber. Rubber against rubber, however, normally give rise to considerable friction. This also prevents the walls of the feedbox to be pressed against the belt, since the wear between the belt and the supporting mat then would be serious.

Disclosure of Invention

The purpose of the invention is to provide a solution to the above problems. More specifically, a purpose is to provide a good seal in connection with any type of skirting, i.e. soft, flexible as well as stiffer and/or sturdier skirting.

Another purpose of the invention is that it may be put to use in connection with any type of belt conveyor.

These and other purposes are served by making the supporting elements elastic and making them counteract sagging of the belt is between the rollers in the area of the skirting, the supporting elements resiliently making sure that the top side of the belt slides against the skirting without any leakage.

The elastic supporting elements generally may be designed according to different principles. Preferably, a purpose of the invention, however, is to offer an elastic supporting element with advantages which are very special in this context. According to the preferred embodiment these advantages may be gained by letting the supporting element consist of a composite material mounted on a carrier, said material comprising at least one wear layer, consisting of a first elastomeric substance with a hardness exceeding 80° Shore A and at least one elastic layer between the wear layer and the carrier, consisting of a second polymeric substance with a hardness of between 15 and 60° Shore A. Among the advantages obtained with a supporting element of this construction may be mentioned the simplicity of the element, making it cheap to manufacture and to install. Further, an elastic supporting element, consisting of a composite material, may adapt to the different load conditions between the supporting rollers. In contrast to completely rigid supporting elements, the element according to the invention thus may be compressed at that point where the contact pressure against the belt is greatest, whereby is avoided that large enough contact pressure develops between the top side of the belt and the skirting to cause excessive heat and wear or to create great brake forces, which would influence the driving means of the belt unfavourably. In other words, a supporting element according to the invention makes it possible to obtain a large enough spring force to maintain a contact between the belt and the skirting which prevents leaking, without making the contact forces large enough to cause great wear on the belt or to brake it.

The wear layer of the supporting element is to be made of a material which does not resist gliding against the conveyor belt, i.e. has a comparatively low coefficient of friction, and is wear resistant. One such material is polyurethane. The wear layer therefore substantially consists of polyurethane. The resilient layer suitably consists of porous rubber, preferably so called mousse rubber, the pores of which are open in contrast to the pores of cellular rubber.

The wear layer in turn may consist of two layers which both substantially consist of polyurethane but have a somewhat different composition. In order further to reduce the friction the outer layer contains one or more friction-lowering substances mixed with the polyurethane. A suitable substance is polytetrafluorethene (PTFE) which may be supplied as a powder to the molten polyurethane before it has set. The PTFE content should be at least 10% by weight preferably 15—25%. Other possible friction decreasing agents which may be added are graphite (5—20%), silicon oil and polyethylene powder.

Polyurethane containing substantial amounts of one or more antifriction agents, however, has a poor adherence to rubber. Threfore an intermediate comparatively thin layer of polyurethane which contains no friction decreasing agent should be provided between the surface layer and the rubber layer. This second polyurethane layer has a different colour than the surface layer (the wear layer). The purpose of this arrangement is to get an indication that the wear layer needs reconditioning, when the wear layer has been worn down to the inner layer so that the signal colour shines through. An advantage of the composite material according to the invention is also that in such a case a new wear layer may be applied by spraying on a new layer of polyurethane.

It is possible also to build the resilient layer of more than one material. It would be conceivable to put a shock-absorbing layer of tread rubber or some comparable material either between the wear layer and the porous, springy rubber layer and/or between the porous, resilient rubber layer and a carrier. It is suitable to let the latter consist of a metal rail.

Further characteristics and advantages of the invention will become apparent in the patent claims and in the following description of a preferred embodiment.

Brief Description of drawings

In the following description of a preferred embodiment of the invention, reference will be made to the attached drawings, of which

Fig. 1 is a perspective view of a conveyor belt and the associated devices at a point of loading;

Fig. 2 is a sectional view illustrating the function of the sealing devices; and

Fig. 3 is a sectional view of a supporting element in conjunction with a side element which is part of the integrated equipment for the sealing function.

Description of preferred Embodiment

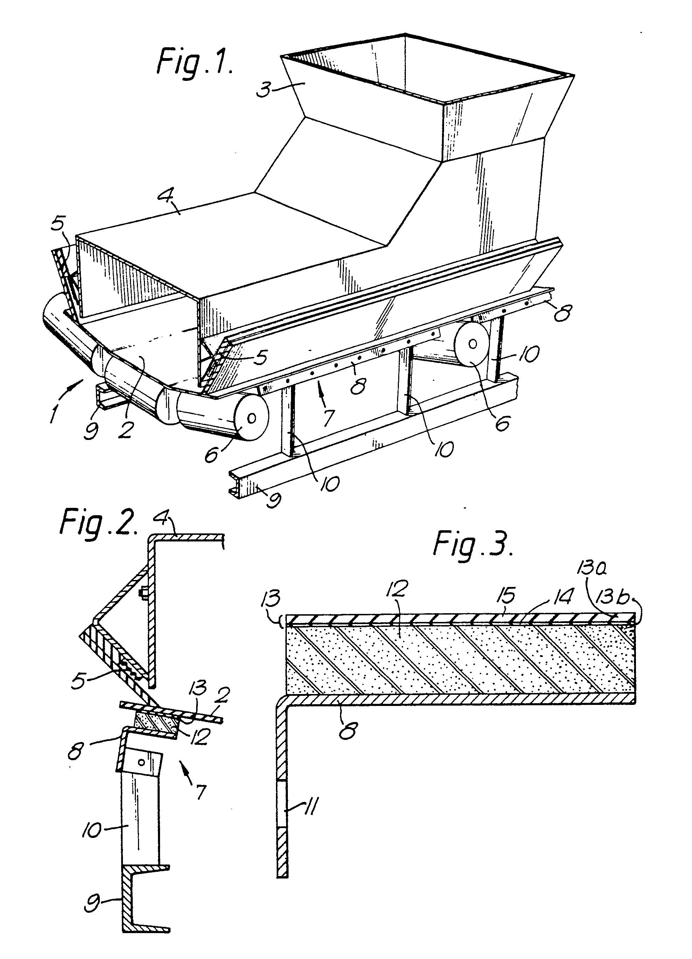

In Fig. 1 a belt conveyor is generally designated by the numeral 1. A conveyor belt is designated 2 and a loading chute 3. A part of the belt after the chute 3 is covered by a hood 4. The goods are loaded directly onto the conveyor belt 2 from the chute 3, and to prevent the escape of material from the belt to the sides sealing skirts 5 are provided. These skirts extend from the sides of the hood 4 and the chute 3 down onto the top side of the belt, with which they engage near the edges of the belt.

According to the invention a good seal is obtained between the skirting 5 and the top side of the belt 2 by keeping the belt 2 in engagement with the skirting 5 also in the regions between the supporting rollers 6 for the belt 2. To this end, a supporting element 7 is arranged along the edges of the belt between each set of rollers 6. In other words the supporting elements are arranged underneath the skirts 5. Each such supporting element 7 comprises a carrier 8, in the form of a rail made from an angle iron. The rail 8 is mounted over a bottom beam 9 by means of supporting props 10. A mounting hole has been designated 11 in Fig. 3. To the rail 8 has been glued an elastic body 12, extending along the entire length of the carrier 8. This elastic body 12 according to the embodiment consists of porous rubber, more specifically so called mousse rubber with a hardness of about 20 to 25° Shore A. The thickness is decided according to the field of application and may vary from 8 to 200 mm. Normally, however, the elastic layer 12 is between 10 and 50 mm thick, which means that it is between 4 and 20 times, normally between 5 and 10 times as thick as a wear layer 13 arranged on top of the elastic layer 12. The thickness of the wear layer 13 may thus vary between about 2 and 10 mm. This wear layer 13 substantially consists of polyurethane, containing additives which lower the already low coefficient of friction of the polyurethane. More particularly the layer 13 is applied in two strata, viz. an inner, thinner layer 14 of bright signal colour, and an outer layer 15, somewhat thicker. The inner layer 14 contains no friction reducing additives and has a good adherence to the porous rubber body 12 as well as to the outer wear layer 15 which contains about 20% by weight polytetrafluorethene (PTFE). The purposes of this arrangment are many: the friction is reduced, the adherence to the rubber layer is improved, and there is obtained an indication that the wear layer needs reconditioning, as the signal colour begins to shine through.

The wear layer 15 may be renewed by spraying polyurethane onto the older substrate. The hardness of the outer layer 15 is about 95° Shore A and of the inner layer 14 about 90-92° Shore A.

**Claims**

1. Use of a composite material attached to a carrier (8), said material comprising at least one wear layer (13) consisting of a first elastomeric substance with a hardness exceeding 80° Shore A and at least one resilient layer (12) between the wear layer and the carrier (8) consisting of a second polymeric substance with a hardness of between 15 and 60° Shore A, for a supporting element (7) for a conveyor belt (2) with sealing skirts (5) arranged above the moving belt, said supporting element being intended to be placed underneath the belt in the regions of the sealing skirts to guarantee sealing between the sealing skirts and the belt by counteracting the sagging of the belt in the region of the sealing skirts.

2. Use as in claim 1, wherein the wear layer consists of substantially polyurethane with a hardness of 85-100, preferably 90—95° Shore A.

3. Use as in claim 1 or 2, wherein the resilient layer consists of porous rubber, preferably mousse rubber.

4. Use as in any of the claims 1—3, wherein the resilient layer is 4—20 times thicker than the wear layer, preferably 5—10 times thicker than the wear layer.

5. Use as in claim 4, wherein the wear layer is 2—10 mm thick, while the resilient layer is 8—200, preferably 10—50 mm thick.

6. Use as in any of the claims 1—5, wherein the carrier is a metal rail, and the supporting element is arranged longitudinally along the belt between the supporting rollers (6) of the conveyor belt.

7. Use as in any of the claims 1—6, wherein the wear layer consists of at least two strata, both substantially consisting of polyurethane but of different composition, the inner layer (14) being considerably thinner than the outer layer (15), said outer layer containing at least one friction reducing additive and said inner layer not containing any friction reducing additive to the polyurethane but having a different colour than the outer layer.

8. Use as in any of the claims 1—7, wherein the composite material consists of said wear layer or layers (13) of substantially polyurethane and said resilient layer (12) of porous rubber.

## Patentansprüche

1. Verwendung eines an einem Tragelement (8) befestigten Verbundmaterials, das wenigstens eine Verschließschicht (13) aus einer ersten elastomeren Substanz mit einer Shore-Härte A von mehr als 80° und wenigstens eine elastische Schicht (12) zwischen der Verschließschicht und dem Tragelement (8) aus einer zweiten polymeren Substanz mit einer Shore-Härte A zwischen 15 und 60°, aufweist, für ein Stützelement (7) eines Bandförderers (2) mit über dem laufenden Band angeordneten Dichtungsschürzen (5), wobei das Stützelement in den Bereichen der Dichtungsschürzen unter dem Band anzubringen ist, um eine Abdichtung zwischen den Dichtungsschürzen und dem Band dadurch zu bewirken, daß es dem Durchhängen des Bands im Bereich der Dichtungsschürzen entgegenwirkt.

2. Verwendung nach Anspruch 1, wobei die Verschließschicht im wesentlichen aus Polyurethan mit einer Shore-Härte A von 85—100, bevorzugt 90—95° besteht.

3. Verwendung nach Anspruch 1 oder 2, wobei die elastische Schicht aus porösem Gummi, bevorzugt Mousse-Gummi, besteht.

4. Verwendung nach einem der Ansprüche 1—3, wobei die elastische Schicht 4—20mal dicker als die Verschließschicht, bevorzugt 5—10mal dicker als die Verschließschicht ist.

5. Verwendung nach Anspruch 4, wobei die Verschließschicht 2—10 mm und die elastische Schicht 8—200, bevorzugt 10—50 mm dick ist.

6. Verwendung nach einem der Ansprüche 1—5, wobei das Tragelement eine Metallschiene ist und das Stützelement in Längsrichtung entlang dem Band zwischen den Stützrollen (6) des Bandförderers angeordnet ist.

7. Verwendung nach einem der Ansprüche 1—6, wobei die Verschließschicht aus wenigstens zwei Lagen, die beide im wesentlichen Polyurethan, jedoch unterschiedlicher Zusammensetzung sind, besteht und die innere Lage (14) erheblich dünner als die äußere Lage (15) ist, wobei die äußere Schicht wenigstens ein reibungsminderndes Additiv und die innere Schicht kein reibungsminderndes Additiv zu dem Polyurethan enthält, jedoch eine von der äußeren Schicht verschiedene Farbe hat.

8. Verwendung nach einem der Ansprüche 1—7, wobei das Verbundmaterial aus der im wesentlichen aus Polyurethan bestehenden Verschließschicht bzw. den Verschließschichten (13) und der elastischen Schicht (12) aus porösem Gummi besteht.

## Revendications

1. Utilisation d'un matériau composite attaché à un appui (8), ledit matériau comprenant au moins une couche d'usure (13) consistant en une première substance élastomère ayant une dureté dépassant 80° Shore A et au moins une couche élastique (12) entre la couche d'usure et l'appui (8) consistant en une seconde substance polymérique ayant une dureté comprise entre 15 et 60° Shore A, pour un élément support (7) pour une bande transporteuse (2) avec des jupes d'étanchéité (5) agencées au-dessus de la bande mobile, ledit élément support étant destiné à être placé en-dessous de la bande dans les régions des jupes d'étanchéité pour garantir l'étanchéité entre les jupes d'étancheité et la bande en s'opposant au fléchissement de la bande dans la région des jupes d'étanchéité.

2. Utilisation selon la revendication 1, où la couche d'usure se compose sensiblement de polyuréthane d'une dureté de 85—100, de préférence de 90—95° Shore A.

3. Utilisation selon la revendication 1 ou 2, où la couche élastique consiste en caoutchouc poreux, de préférence du caoutchouc mousse.

4. Utilisation selon l'une quelconque des revendications 1—3, où la couche élastique est 4—20 fois plus épaisse que la couche d'usure, de préférence 5—10 fois plus épaisse que la couche d'usure.

5. Utilisation selon la revendication 4, où la couche d'usure a 2—10 mm d'épaisseur, tandis que la couche élastique a 8—200, de préférence 10—50 mm d'épaisseur.

6. Utilisation selon l'une quelconque des revendications 1—5, où l'appui est un rail en métal et l'élément support est agencé longitudinalement le long de la bande entre les rouleaux de support (6) de la bande transporteuse.

7. Utilisation selon l'une quelconque des revendications 1—6, où la couche d'usure se compose d'au moins deux nappes, toutes deux consistant sensiblement en polyuréthane mais de composition différente, la couche interne (14) étant considérablement plus mince que la couche externe (15), ladite couche externe contenant au moins un additif réduisant le frottement et ladite couche interne ne contenant aucun additif au polyuréthane, réduisant le frottement, mais ayant une couleur différente de celle de la couche externe.

8. Utilisation selon l'une quelconque des revendications 1—7, où le matériau composite comprend ladite couche d'usure ou les couches (13) sensiblement en polyuréthane et ladite couche élastique (12) en caoutchouc poreux.

Fig.1.

Fig.2.

Fig.3.